# EUROPEAN PATENT SPECIFICATION

(11) **EP 3 055 843 B1**
(45) Date of publication and mention of the grant of the patent: **06.09.2017**
(21) Application number: 14796281.5
(22) Date of filing: 07.10.2014
(51) Int. Cl.: G08B 13/196, F16M 11/20

(54) **SURVEILLANCE EQUIPMENT**
ÜBERWACHUNGSAUSRÜSTUNG
ÉQUIPEMENT DE SURVEILLANCE

(30) Priority: 08.10.2013 IT BS20130141
(43) Date of publication of application: 17.08.2016
(73) Proprietor: 037 S.r.l. Tecnologia e Sicurezza, 24123 Bergamo (IT)
(72) Inventor: COLOMBI, Alberto, I-24010 Ponteranica (Bergamo) (IT)
(74) Representative: Chimini, Francesco
(86) International application number: PCT/IB2014/065103
(87) International publication number: WO 2015/052642

(56) References cited:
- WO-A1-2008/100955
- FR-A1- 2 941 121
- FR-A1- 2 988 505
- JP-A- 2006 322 647
- US-A1- 2004 258 404
- US-A1- 2013 142 612

## Description

The present invention relates to a surveillance apparatus, in particular an apparatus for the video-surveillance of even extensive areas.

Telescopic posts bearing lighting devices, also called "lighthouse towers", for the illumination of areas under surveillance, in particular at night are known of.

In addition, video surveillance devices based on the use of cameras and recording devices and the analysis of images captured by the cameras are known of.

Nowadays however the need is deeply felt to integrate in a single piece of equipment all the devices needed to perform the video surveillance of an area of a certain size or of an area of transit, and to make such equipment as self-contained as possible, compact and easily transportable so that it can be positioned and left even in remote areas and so as to quickly change the area or perimeter under surveillance.

It is however evident that the integration of various surveillance devices and the relative power supplies, command and control means in a single device, to be used even in remote and/or dangerous areas, poses considerable problems both as regards the safety of such equipment in terms of tampering or theft and atmospheric agents, and as regards its easy transportability.

The purpose of the present invention is to propose surveillance equipment, able to satisfy the aforementioned requirements of maximum safety and flexibility of use, while at the same time resolving the drawbacks spoken of above

The document US 2004/258404 A1 discloses a surveillance equipment according to the preamble of claim 1.

Such purpose is achieved by surveillance equipment according to claim 1. The dependent claims describe preferred embodiments of the invention.

The characteristics and advantages of the surveillance equipment according to the invention will, in any case, be evident from the description given below of its preferred embodiments, made by way of a nonlimiting example with reference to the appended drawings, wherein:

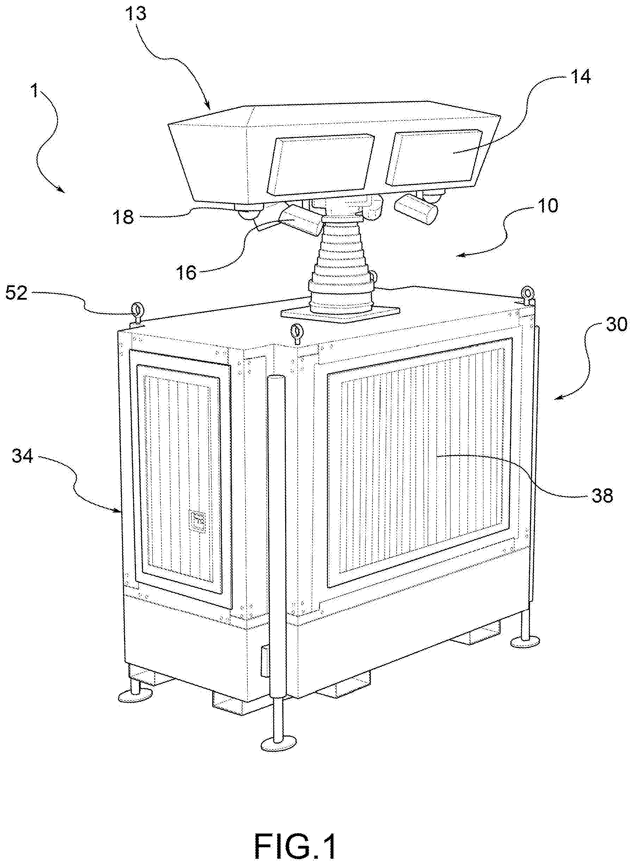

- Figure 1 shows the surveillance equipment according to the invention, with the telescopic post in the configuration of minimum extension;

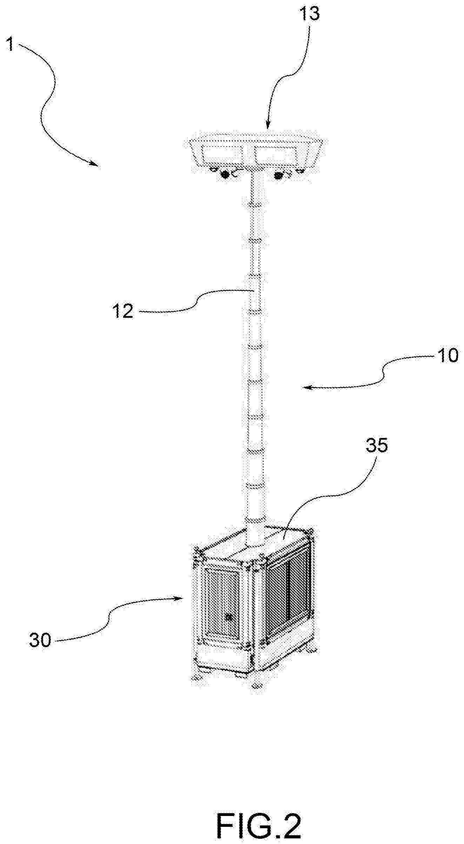

- Figure 2 shows the equipment with the telescopic post in the configuration of maximum extension;

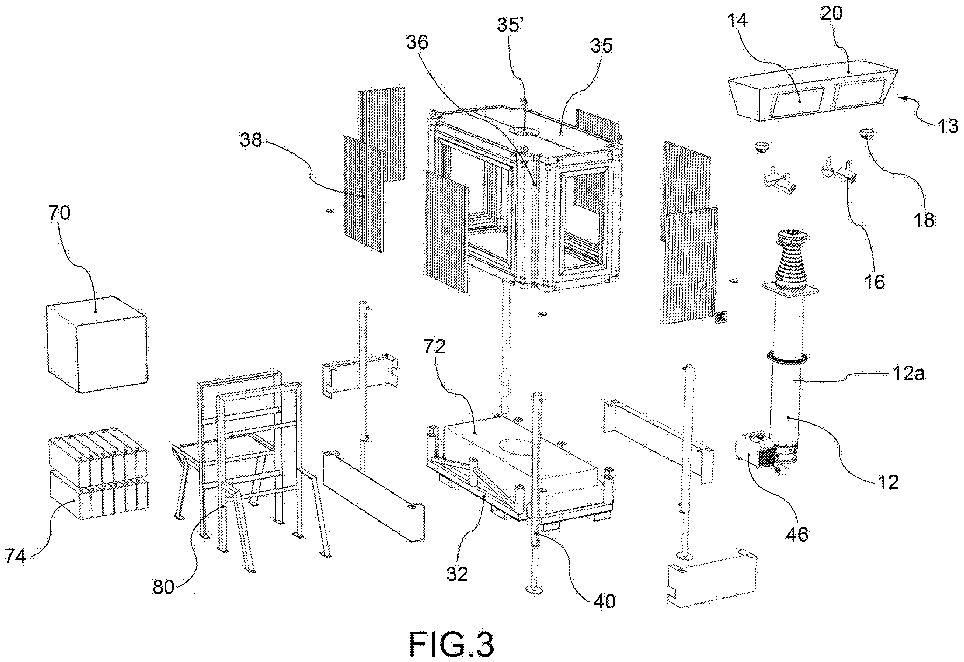

- Figure 3 is an exploded view of the main components of the equipment;

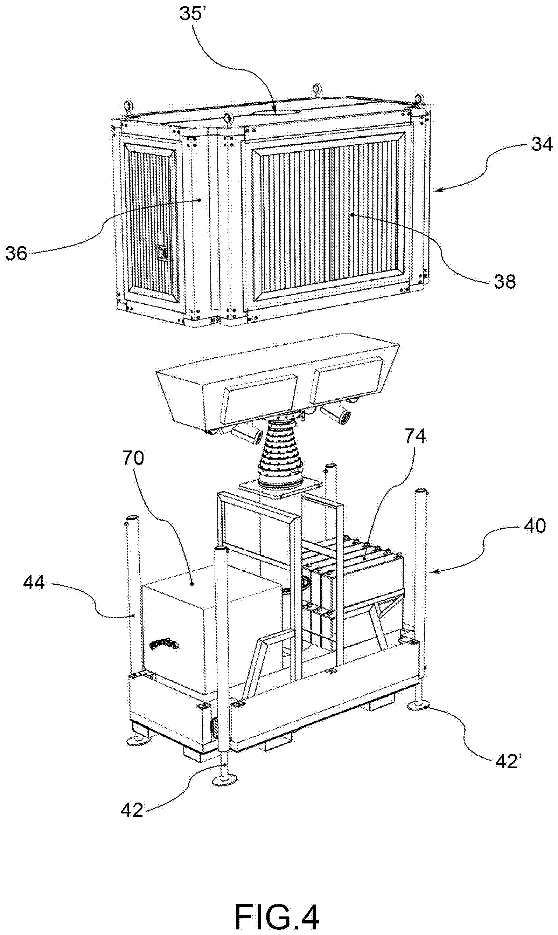

- Figure 4 is a perspective view corresponding to Figure 1, but with an upper part of the cabin separated from a lower part so as to show the devices housed in the cabin;
- Figure 5 is a perspective view of the equipment, in a lifting configuration of the entire cabin;
- Figures 6 and 7 show, from two different angles, the equipment in a lifting configuration of the side walls of the cabin in relation to the base of the cabin; and
- Figure 8 shows the loading of the equipment on the loading floor of a transport vehicle.

In said drawings, reference numeral 1 globally denotes the surveillance equipment according to the invention.

The surveillance equipment 1 comprises a surveillance tower 10 and relative electrical and electronic power supply and control devices. The surveillance tower 10 comprises a telescopic post 12 on top of which surveillance devices are mounted generally denoted by reference numeral 13. Said surveillance devices 13 comprise lighting devices 14, image acquisition devices 16, 18 and/or other sensors suitable for detecting the entrance or the presence of a person, object or animal within a predefined area. For example, a predefined area is taken to mean an area bounded by a virtual perimeter defined by special software on the basis of the images acquired by the image acquisition devices.

In a practical embodiment, the lighting devices 14 include one or more spotlights of the latest generation with LEDs from 80 to 200 W and 1000 lm (in the 168 W version) each. The image acquisition devices include one or more cameras 16 with intelligent video analysis for intrusion detection, license plate recognition, detection of an object moved or deposited, access control and one or more cameras 18 of the PTZ ("PAN / TILT / ZOOM") type enabling a remote operator to rotate the camera in all directions and zoom in on areas of specific interest. Advantageously, the image acquisition devices 16, 18 are connected to a video recorder DVR 20, for example of the multi-card type, also housed on the top of the surveillance tower.

In a preferred embodiment, the telescopic post 12 is of the type with hydraulic drive. For example, the post in the configuration of maximum extension has a height of about 24 m.

The electric and electronic power supply and control devices of the surveillance devices are housed in a cabin 30 placed at the base of the surveillance tower 10. More precisely, said cabin 30 extends around and contains at least partially the lower segment 12a of the telescopic post 12. For example, the cabin 30 has a substantially rectangular base and a height substantially equal to that of the lower segment 12a of the telescopic post 12. As will be described below, in a preferred embodiment the cabin has dimensions such as to be transportable on a transport vehicle even of a small size, such as a standard pick-up.

In a general embodiment, the cabin 30 comprises a support base 32 for the surveillance tower 10 and for the relative electrical and electronic devices, and at least armoured side walls 34 suitable to prevent access to the electrical and electronic devices contained in the cabin. In other words, the armoured side walls 34, and preferably also a top wall 36 which acts as the ceiling of the cabin, form an impenetrable covering of the devices contained inside the cabin. Armoured walls are taken to mean walls which cannot be unhinged or penetrated except using tools and/or devices and/or taking a length of time making it virtually impossible to assail the cabin without triggering an alarm and/or without the security guards having time to intervene. In fact, it is to be considered that it is not possible to approach the cabin without triggering the alarm because the equipment is able to detect already at a considerable distance from the cabin, for example 50 metres, any type of unauthorised approach or intrusion.

For example, in a preferred embodiment, the cabin 30 comprises a lower plate 32, acting as a support base of the surveillance tower and relative power supply and control devices, a robust framework 36, for example made of steel, resting on said bottom plate 32 and defining the perimetral cornices inside which armoured panels 38 are attached. The side walls 34 of the cabin 30 are thus formed by the coupling of the metal framework 36 with said armoured panels 38, which, while guaranteeing a high resistance, are preferably lighter than a side wall made entirely of steel. For example, the armoured panels 38 are made of stainless steel and/or Kevlar.

Preferably, the side walls 34 are devoid of any lock or other opening; alternatively, the walls may be provided with partial armoured and impenetrable openings.

This way, the cabin is armoured while at the same time limiting the weight of the equipment so as to make it transportable, as mentioned above, even on the loading floor of a standard pick-up vehicle.

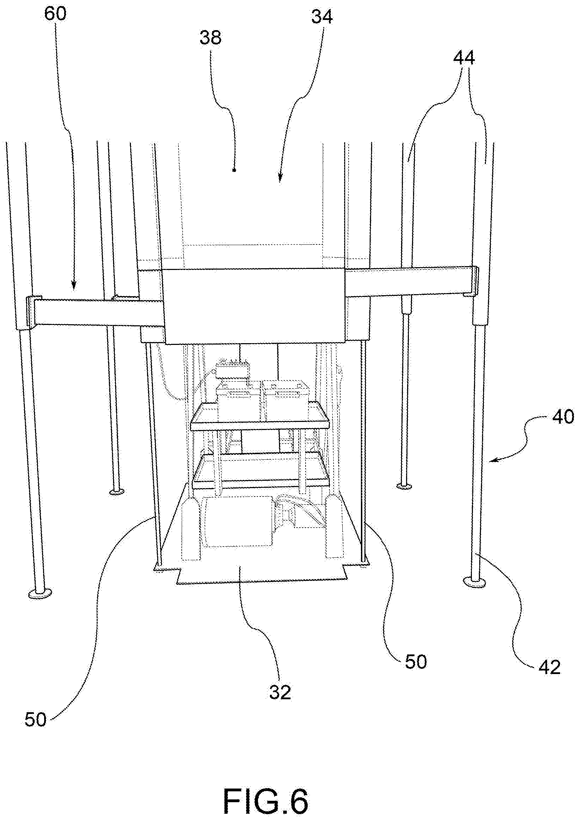

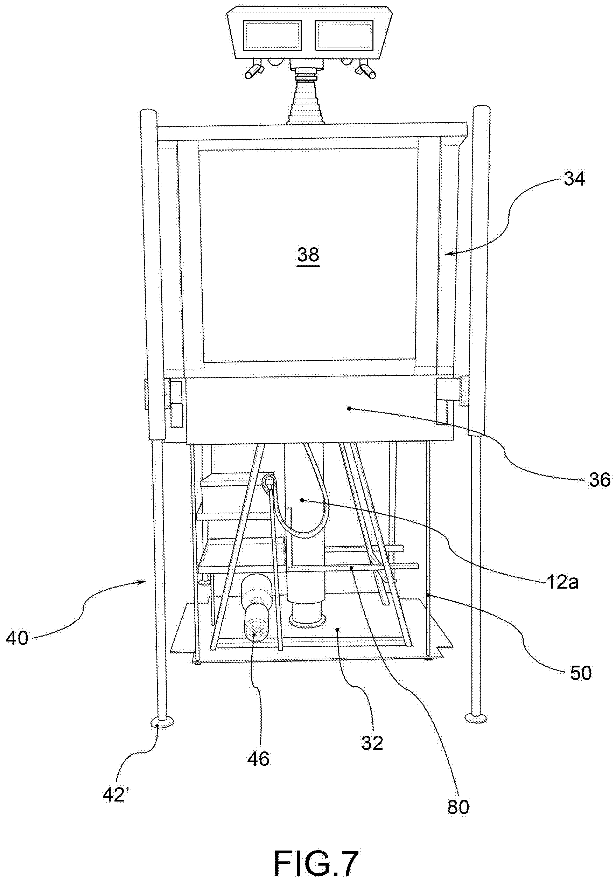

According to one aspect of the invention, the surveillance equipment 1 is provided with lifting means 40 suitable to cause a lifting of the armoured side walls 34 from said support base 32 so as to make the electric and electronic devices accessible,for example to perform maintenance or adjustments (figures 6 and 7). Said lifting means 40 are controlled from outside the cabin, for example by means of a remote control.

In a preferred embodiment, the lifting means 40 comprise telescopic devices having a lower portion 42 resting on the ground and an upper portion 44 sliding in relation to the lower portion and integral with the side walls 34 of the cabin 30. For example, the lower portion 42 is provided with a foot 42 for resting on the ground. Advantageously, the telescopic devices are also controllable independently of each other, so as to allow a stable support of the lifting means 40 even on sloping or not perfectly level ground.

In a preferred embodiment, said lifting means 40 comprise hydraulic jacks.

However, said lifting means 40 are driven by a control unit 46, for example a hydraulic unit, housed inside the cabin 30 but also preferably controllable from outside, for example by remote control.

Advantageously, said control unit 46 is also suitable to operate the telescopic post 12.

According to another aspect of the invention, the support base 32 and side walls 34 are connected to each other by means of releasable connection means. This way, depending on whether or not it is connected to the side walls 34, the support base 32 is lifted jointly with the side walls 34 by the lifting means 40 or is moved away from said side walls to allow, as explained above, access to the devices housed inside the cabin.

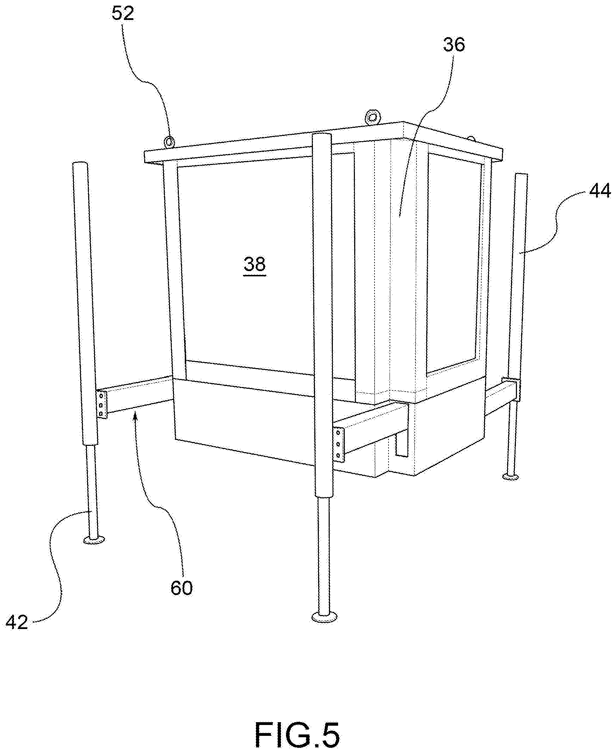

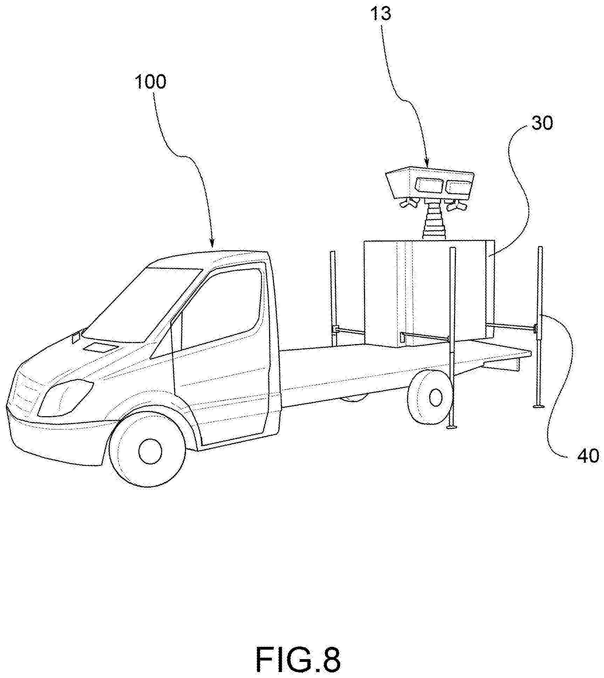

When the support base 32 is integral with the side walls 34, the entire cabin 30 can be lifted from the ground thanks to the lifting means 40 (Figure 5), for example in the case of support exclusively through said lifting means 40 on a inclined or non-level terrain, or to allow the positioning of the cabin 30 on the loading floor of a transport vehicle 100 (figure 8), or to safeguard the integrity of the internal devices of the cabin in the event that the support terrain is struck by water or mud.

To such purpose, the equipment advantageously comprises humidity sensors suitable to detect the presence of water or mud on the support terrain. In this case, the electronic control devices are programmed to automatically command the lifting means 40 to lift the cabin off the ground upon receipt of a signal from said humidity sensors.

According to one embodiment, vertical connection rods 50 (visible in figures 6 and 7) extend from the support base 32 which cross the side walls 34 and which end above with a threaded end portion to which a locking element 52 is screwed. For example, said locking element 52 is ring-shaped to be used for lifting and transporting the equipment by crane or helicopter.

For example, said vertical connection rods cross the vertical portions of the metal framework 36.

Therefore, to access the devices inside the cabin, an operator simply unscrews and removes the locking element 52 from the respective connection rods 50 and thereafter actuates the lifting means 40. This way, the support base 32 with the vertical connection rods remains resting on the ground while the side walls 34 together with the upper wall 35 (if present and integral with said side walls 34) is raised to a height sufficient to allow the operator to perform the desired operations on the devices inside the cabin.

According to a further aspect of the invention, the lifting means 40 are attached to respective extractable horizontal arms 60 (visible in figures 5 and 6), so that said lifting means 40 are movable between a rearward position, in which they are adjacent to the side walls 34 of the cabin, and a forward position, in which they are distanced from said side walls 34.

By virtue of the reduced dimensions of the cabin, the positioning of the lifting means 40 at a distance from the side walls 34 makes it possible to increase the stability of the support on the ground of the equipment, as shown for example in figure 8, facilitating the loading and unloading of the equipment onto and off a transport vehicle 100.

In one embodiment, said extractable horizontal arms 60 consist of pistons of respective hydraulic cylinders, the lining of which is connected to a respective side wall 34. For example, the cylinder lining is integral with a lower horizontal portion of the metal structure 36. Advantageously, said hydraulic cylinders are controlled by the same hydraulic control unit 46 which actuates the lifting means 40.

Returning to the cabin 30, in a preferred embodiment it comprises, as said above, a top wall 35 substantially parallel to the support base 32 and acting as a ceiling or in any case as an upper closure element of the compartment delimited by the side walls 34 and by the support base 32. Preferably, moreover, said upper wall 35 is integral with the side walls 34, for example by means of the metal framework 36. In order to enable the telescopic post 12, and thus the surveillance equipment 13 mounted on the top thereof to be moved freely without interfering with said upper wall 35 of the cabin, at least the upper segment of the telescopic post 12, even when it is in the fully retracted configuration, projects beyond said top wall 35 passing through an aperture 35' made in the upper wall 35.

Since, in one embodiment, the surveillance devices 13 have a transverse dimension greater than the diameter of the through aperture 35', which for reasons of safety and impermeability to atmospheric agents, is chosen so as to barely touch, possibly with the interposition of a sealing element, the telescopic post, the equipment comprises detection means suitable for detecting the movement of the side walls or the top wall of the cabin in relation to the support base. The electronic control devices are thus programmed to automatically control the extension of the telescopic post upon receipt of a signal from said lifting detection means.

Returning now to the devices housed inside the cabin 30, in a preferred embodiment the electric power supply devices comprise a voltage generator 70, with relative reservoir 72 for the fuel which powers said generator, and a battery 74, for example of the rechargeable type.

Preferably, the surveillance equipment is battery powered with a back-up generator, for example of 7 kW, and with the possibility of integrating photovoltaic panels. For example, it is possible to achieve 700 hours of continuous power in complete autonomy.

The high-efficiency voltage generator 70 is equipped with a charge sensor and only starts when the battery 74 reaches pre-determined voltage parameters. While powering the equipment, the generator also recharges the battery, minimising total fuel consumption.

In one embodiment, the support base 32 is placed inside an inner mount 80 for supporting the telescopic post 12 and at least some of the electrical and/or electronic and/or hydraulic devices as shown for example in figures 6 and 7.

All the functions of the device can be managed, as well as from the control unit on board, also from a smartphones, tablets, laptops etc.

In brief, some of the main control functions are: general configuration of the equipment, lifting/ lowering of the surveillance tower, turning on/off the spotlights, turning on/off the generator, operating the lifting means, operating the support arms of the lifting means, defining the alarm lines (virtual fence), the movement and pointing of the cameras, the recording of events.

It is to be noted that the surveillance equipment can also be used in electrical autonomy for mobile temporary lighting and transmission of radio signals of various kinds.

A person skilled in the art may make modifications and variations to the embodiments of the equipment according to the invention, replacing elements with others functionally equivalent so as to satisfy contingent requirements while remaining within the sphere of protection of the following claims.

For example, the hydraulic devices, such as the lifting means and/or relative extractable support arms, may be replaced with electric actuators.

Each of the characteristics described as belonging to a possible embodiment may be realised independently of the other embodiments described.

## Claims

1. Surveillance equipment, comprising:
- a surveillance tower (10) comprising a telescopic post (12) on the top of which surveillance devices (13) are mounted, said surveillance devices (13) comprising lighting devices (14), image acquisition devices (16, 18) and/or other sensors suitable for detecting the entrance or the presence of a person, object or animal within a predefined area;
- electric and electronic power supply and control devices of the surveillance tower;
- a cabin (30) containing at least partially the lower segment (12a) of the telescopic post (12) and said electric and electronic power supply and control devices, wherein said cabin (30) comprises:
- a support base (32) for the surveillance tower (10) and for the electric and electronic devices;
- armoured side walls (34) suitable to prevent access to the electric and electronic devices contained in the cabin; **characterised in that** the surveillance equipment is provided with lifting means (40) suitable to cause a lifting of said armoured side walls (34) from said support base (32) so as to make the electric and electronic devices accessible, said lifting means (40) being suitable for being controlled from outside the cabin.

2. Surveillance equipment according to claim 1, wherein said lifting means (40) comprise telescopic devices having a lower portion (42) resting on the ground and an upper portion (44) sliding in relation to the lower portion and integral with the side walls (34) of the cabin.

3. Surveillance equipment according to the previous claim, wherein said lifting means (40) comprise hydraulic jacks.

4. Surveillance equipment according to claim 2 or 3, wherein said lifting means (40) are operated by a control unit (46), for example a hydraulic control unit, suitable for being controlled from outside the cabin (30).

5. Surveillance equipment according to any of the previous claims, wherein the support base (32) and the side walls (34) are connected to each other by means of releasable connection means, in such a way that the support base can be raised integrally with the side walls by the lifting means (40) or can be distanced from said side walls depending on the status of said releasable connection means.

6. Surveillance equipment according to the previous claim, wherein vertical connection rods (50) extend from the support base (32) which cross the side walls (34) and which end above with a threaded end portion to which a locking element (52) is screwed.

7. Surveillance equipment according to any of the claims 5-6, wherein the lifting means (40) are attached to respective extractable horizontal arms (60), so that said lifting means are movable between a rearward position, in which they are adjacent to the side walls of the cabin, and a forward position, in which they are distanced from said side walls.

8. Surveillance equipment according to the previous claim, wherein said extractable horizontal arms (60) comprise pistons of respective hydraulic cylinders, the liner of which is connected to a respective side wall.

9. Surveillance equipment according to any of the previous claims, wherein the lifting means, when in an extended lifting configuration of the cabin, are suitable to permit the cabin to be positioned on the loading platform of a transport vehicle (100).

10. Surveillance equipment according to any of the previous claims, wherein the cabin (30) comprises an upper wall (35) substantially parallel to the support base (32), and wherein at least the upper segment of the telescopic post, even when in the completely retracted configuration, projects beyond said upper wall passing through a through aperture (35') made in said upper wall (35).

11. Surveillance equipment according to the previous claim, wherein the surveillance devices (13) have larger dimensions than the diameter of the through aperture (35'), and wherein the equipment comprises lifting detection means suitable to detect the movement of the side walls of the cabin in relation to the support base, the electronic control devices being programmed to automatically command the extension of the telescopic post upon receiving a signal coming from said lifting detection means.

12. Surveillance equipment according to any of the previous claims, comprising humidity sensors suitable to detect the presence of water on the ground supporting the equipment, the electronic control devices being programmed to automatically command the lifting means to lift the cabin from the ground upon receiving a signal coming from said humidity sensors.

13. Surveillance equipment according to any of the previous claims, wherein the surveillance devices comprise telecameras which can be remotely controlled and a video recorder of images.

14. Surveillance equipment according to any of the previous claims, wherein the height of the side walls of the cabin is substantially equal to the height of the lower segment of the telescopic post.

15. Surveillance equipment according to any of the previous claims, wherein the cabin comprises a lower plate acting as a support base (32), and a metal framework (36), for example made of steel, resting on said lower plate and defining perimetral frames inside which armoured panels (38) are attached.

## Patentansprüche

1. Überwachungsausrüstung, umfassend:
- einen Überwachungsturm (10), umfassend einen Teleskoppfosten (12), an dessen Oberseite Überwachungsvorrichtungen (13) angebracht sind, wobei die Überwachungsvorrichtungen (13) Beleuchtungsvorrichtungen (14), Bilderfassungsvorrichtungen (16, 18) und/oder andere Sensoren, die zum Erfassen des Eintritts oder der Gegenwart einer Person, eines Objekts oder eines Tieres innerhalb eines vordefinierten Bereichs geeignet sind, umfassen,
- elektrische und elektronische Stromversorgungs- und Steuervorrichtungen des Überwachungsturms,
- eine Kabine (30), enthaltend mindestens teilweise das untere Segment (12a) des Teleskoppfostens (12) und die elektrischen und elektronischen Stromversorgungs- und Steuervorrichtungen, wobei die Kabine (30) umfaßt:
- eine Stützbasis (32) für den Überwachungsturm (10) und für die elektrischen und elektronischen Vorrichtungen,
- gepanzerte Seitenwände (34), geeignet um den Zugang zu den elektrischen und elektronischen Vorrichtungen, enthalten in der Kabine, zu verhindern,
**dadurch gekennzeichnet, daß**
die Überwachungsausrüstung mit Hebemitteln (40) versehen ist, die geeignet sind, ein Anheben der gepanzerten Seitenwände (34) von der Stützbasis (32) derart zu bewirken, daß die elektrischen und elektronischen Vorrichtungen zugänglich gemacht werden, wobei die Hebemittel (40) geeignet sind, von außerhalb der Kabine kontrolliert zu werden.

2. Überwachungsausrüstung gemäß Anspruch 1, wobei die Hebemittel (40) Teleskopvorrichtungen mit einem unteren Abschnitt (42), der auf dem Boden aufliegt, und einem oberen Abschnitt (44), gleitend in Bezug zu dem unteren Abschnitt und integral mit den Seitenwänden (34) der Kabine, umfassen.

3. Überwachungsausrüstung gemäß dem vorhergehenden Anspruch, wobei die Hebemittel (40) hydraulische Köpfe umfassen.

4. Überwachungsausrüstung gemäß Anspruch 2 oder 3, wobei die Hebemittel (40) durch eine Steuereinheit (46), beispielsweise eine hydraulische Steuereinheit, geeignet zur Kontrolle von außerhalb der Kabine (30), betrieben werden.

5. Überwachungsausrüstung gemäß einem der vorhergehenden Ansprüche, wobei die Stützbasis (32) und die Seitenwände (34) mittels lösbarer Verbindungsmittel in einer solchen Weise miteinander verbunden sind, daß die Stützbasis integral mit den Seitenwänden durch die Hebemittel (40) angehoben werden kann oder von den Seitenwänden abhängig von dem Zustand der lösbaren Verbindungsmittel beabstandet sein kann.

6. Überwachungsausrüstung gemäß dem vorhergehenden Anspruch, wobei sich vertikale Verbindungsstangen (50) von der Stützbasis (32) erstrecken, welche die Seitenwände (34) kreuzen und welche oberhalb mit einem Gewindeendabschnitt enden, mit dem ein Verriegelungselement (52) verschraubt ist.

7. Überwachungsausrüstung gemäß einem der Ansprüche 5 - 6, wobei die Hebemittel (40) an entsprechende herausziehbare horizontale Arme (60) befestigt sind, so daß die Hebemittel zwischen einer hinteren Position, in welcher sie an die Seitenwände der Kabine angrenzend sind, und einer vorderen Position, in welcher sie von den Seitenwänden beabstandet sind, bewegbar sind.

8. Überwachungsausrüstung gemäß dem vorhergehenden Anspruch, wobei die herausziehbaren horizontalen Arme (60) Kolben von entsprechenden Hydraulikzylindern umfassen, deren Auskleidung mit einer entsprechenden Seitenwand verbunden sind.

9. Überwachungsausrüstung gemäß einem der vorhergehenden Ansprüche, wobei die Hebemittel, wenn in einer ausgefahrenen bzw. gestreckten Hubkonfiguration der Kabine, geeignet sind zuzulassen, daß die Kabine auf der Ladeplattform eines Transportfahrzeugs (100) positioniert wird.

10. Überwachungsausrüstung gemäß einem der vorhergehenden Ansprüche, wobei die Kabine (30) eine obere Wand (35) im Wesentlichen parallel zu der Stützbasis (32) umfaßt, und wobei mindestens das obere Segment des Teleskoppfostens, auch wenn in der vollständig zurückgezogenen Konfiguration, über die obere Wand hinausragt, die durch eine Durchgangsöffnung (35'), hergestellt in der oberen Wand (35), verläuft.

11. Überwachungsausrüstung gemäß dem vorhergehenden Anspruch, wobei die Überwachungsvorrichtungen (13) größere Dimensionen als der Durchmesser der Durchgangsöffnung (35') aufweisen, und wobei die Ausstattung Hebeerfassungsmittel umfaßt, die geeignet sind, die Bewegung der Seitenwände der Kabine in Bezug auf die Stützbasis zu erfassen, wobei die elektronischen Steuervorrichtungen programmiert sind, automatisch die Verlängerung des Teleskoppfostens zu befehlen, wenn ein Signal empfangen wird, das von den Hebeerfassungsmittel kommt.

12. Überwachungsausrüstung nach einem der vorhergehenden Ansprüche, umfassend Feuchtigkeitssensoren, die geeignet sind, die Gegenwart von Wasser auf dem Boden, welcher die Ausrüstung stützt, zu erfassen, wobei die elektronischen Steuervorrichtungen programmiert sind, automatisch zu befehlen, dass beim Erhalt eines Signals, welches von den Feuchtigkeitssensoren kommt, die Hebemittel die Kabine vom Boden anheben.

13. Überwachungsausrüstung gemäß einem der vorhergehenden Ansprüche, wobei die Überwachungsvorrichtungen Telekameras, die ferngesteuert werden können, und einen Videorekorder für Bildern umfassen.

14. Überwachungsausrüstung gemäß einem der vorhergehenden Ansprüche, wobei die Höhe der Seitenwände der Kabine im Wesentlichen gleich der Höhe des unteren Segments des Teleskoppfosten ist.

15. Überwachungsausrüstung gemäß einem der vorhergehenden Ansprüche, wobei die Kabine eine untere Platte, die als eine Stützbasis (32) wirkt, und einen Metallrahmen (36), beispielsweise aus Stahl, der auf der unteren Platte aufliegt und perimetrische Rahmen definiert, innerhalb derer gepanzerte Paneele (38) befestigt sind, umfaßt.

## Revendications

1. Équipement de surveillance, comprenant :
- une tour de surveillance (10), comprenant un montant télescopique (12) au-dessus duquel sont montés des dispositifs de surveillance (13), lesdits dispositifs de surveillance (13) comprenant des dispositifs d'éclairage (14), des dispositifs d'acquisition d'image (16, 18) et/ou d'autres capteurs appropriés pour détecter l'entrée ou la présence d'une personne, d'un objet ou d'un animal à l'intérieur dans une zone prédéfinie ;
- des dispositifs d'alimentation et de commande électrique et électronique de la tour de surveillance ;
- une cabine (30) contenant au moins partiellement le segment inférieur (12a) du montant télescopique (12) et lesdits dispositifs d'alimentation et de commande électrique et électronique, dans lequel ladite cabine (30) comprend :
- une base de support (32) pour la tour de surveillance (10) et pour les dispositifs électriques et électroniques ;
- des parois latérales blindées (34) appropriées pour empêcher l'accès aux dispositifs électriques et électroniques contenus dans la cabine ;
**caractérisé en ce que**
l'équipement de surveillance est doté de moyens de levage (40) appropriés pour provoquer un soulèvement desdites parois latérales blindées (34) à partir de ladite base de support (32) de sorte à rendre accessibles les dispositifs électriques et électroniques, lesdits moyens de levage (40) étant appropriés pour être commandés depuis l'extérieur de la cabine.

2. Équipement de surveillance selon la revendication 1, dans lequel lesdits moyens de levage (40) comprennent des dispositifs télescopiques possédant une partie inférieure (42) reposant sur le sol et une partie supérieure (44) coulissant par rapport à la partie inférieure et d'un seul tenant avec les parois latérales (34) de la cabine.

3. Équipement de surveillance selon la revendication précédente, dans lequel lesdits moyens de levage (40) comprennent des vérins hydrauliques.

4. Équipement de surveillance selon la revendication 2 ou 3, dans lequel lesdits moyens de levage (40) sont pilotés par une unité de commande (46), par exemple une unité de commande hydraulique, appropriée pour être commandée depuis l'extérieur de la cabine (30).

5. Équipement de surveillance selon l'une quelconque des revendications précédentes, dans lequel la base de support (32) et les parois latérales (34) sont reliées entre elles par des moyens de connexion libérables, de manière à ce que la base de support puisse être soulevée d'un seul tenant avec les parois latérales par les moyens de levage (40) ou puisse être éloignée desdites parois latérales en fonction de l'état desdits moyens de connexion libérables.

6. Équipement de surveillance selon la revendication précédente, dans lequel des tiges de liaison verticales (50) s'étendent à partir de la base de support (32), qui traversent les parois latérales (34) et qui se terminent sur le dessus par une partie d'extrémité filetée à laquelle est vissé un élément de blocage (52).

7. Équipement de surveillance selon l'une quelconque des revendications 5 ou 6, dans lequel les moyens de levage (40) sont fixés à des bras horizontaux extractibles respectifs (60), de sorte que lesdits moyens de levage sont mobiles entre une position arrière, dans laquelle ils sont adjacents aux parois latérales de la cabine, et une position avant, dans laquelle ils sont éloignés desdites parois latérales.

8. Équipement de surveillance selon la revendication précédente, dans lequel lesdits bras horizontaux extractibles (60) comprennent des pistons de vérins hydrauliques respectifs, dont le revêtement est relié à une paroi latérale respective.

9. Équipement de surveillance selon l'une quelconque des revendications précédentes, dans lequel les moyens de levage, dans une configuration de levage déployée de la cabine, sont appropriés pour permettre à la cabine d'être positionnée sur la plateforme de chargement d'un véhicule de transport (100).

10. Équipement de surveillance selon l'une quelconque des revendications précédentes, dans lequel la cabine (30) comprend une paroi supérieure (35) sensiblement parallèle à la base de support (32), et dans lequel au moins le segment supérieur du montant télescopique, même lorsqu'il est dans la configuration complétement rétractée, fait saillie au-delà de ladite paroi supérieure traversant une ouverture débouchante (35') faite dans ladite paroi supérieure (35).

11. Équipement de surveillance selon la revendication précédente, dans lequel les dispositifs de surveillance (13) possèdent des dimensions supérieures au diamètre de l'ouverture débouchante (35'), et dans lequel l'équipement comprend des moyens de détection de levage appropriés pour détecter le déplacement des parois latérales de la cabine par rapport à la base de support, les dispositifs de commande électronique étant programmés pour commander automatiquement l'extension du montant télescopique sur réception d'un signal provenant desdits moyens de détection de levage.

12. Équipement de surveillance selon l'une quelconque des revendications précédentes, comprenant des capteurs d'humidité appropriés pour détecter la présence d'eau sur le sol supportant l'équipement, les dispositifs de commande électronique étant programmés pour commander automatiquement les moyens de levage pour soulever la cabine du sol sur réception d'un signal provenant desdits capteurs d'humidité.

13. Équipement de surveillance selon l'une quelconque des revendications précédentes, dans lequel les dispositifs de surveillance comprennent des caméras de prise de vues qui peuvent être commandées à distance et un enregistreur d'images vidéo.

14. Équipement de surveillance selon l'une quelconque des revendications précédentes, dans lequel la hauteur des parois latérales de la cabine est sensiblement égale à la hauteur du segment inférieur du montant télescopique.

15. Équipement de surveillance selon l'une quelconque des revendications précédentes, dans lequel la cabine comprend une plaque inférieure tenant lieu de base de support (32) et un bâti métallique (36), par exemple en acier, reposant sur ladite plaque inférieure et définissant des cadres périphériques à l'intérieur desquels sont fixés des panneaux blindés (38).
